# EUROPÄISCHE PATENTSCHRIFT

(11) **EP 1 866 591 B1**
(45) Veröffentlichungstag und Bekanntmachung des Hinweises auf die Patenterteilung: **14.10.2009**
(21) Anmeldenummer: 06742525.6
(22) Anmeldetag: 23.03.2006
(51) Int. Cl.: F28F 27/02, F02M 25/07

(54) **ABGASWÄRMEÜBERTRAGER, INSBESONDERE ABGASKÜHLER FÜR ABGASRÜCKFÜHRUNG IN KRAFTFAHRZEUGEN**
EXHAUST GAS HEAT EXCHANGER, IN PARTICULAR AN EXHAUST GAS COOLER FOR EXHAUST GAS RECIRCULATION IN A MOTOR VEHICLE
ECHANGEUR THERMIQUE POUR GAZ D'ECHAPPEMENT, NOTAMMENT REFROIDISSEUR DE GAZ D'ECHAPPEMENT POUR LE RECYCLAGE DES GAZ D'ECHAPPEMENT DANS LES VEHICULES A MOTEUR

(30) Priorität: 24.03.2005 DE 102005014385
(43) Veröffentlichungstag der Anmeldung: 19.12.2007
(60) Teilanmeldung: 09167396.2
(73) Patentinhaber: Behr GmbH & Co. KG, 70469 Stuttgart (DE); Emitec Gesellschaft für Emissionstechnologie mbH, 53797 Lohmar (DE)
(72) Erfinder: BRÜCK, Rolf, 51427 Bergisch Gladbach (DE); GESKES, Peter, 73760 Ostfildern (DE); MAUCHER, Ulrich, 70825 Korntal-Münchingen (DE); RUCKWIED, Jens, 70195 Stuttgart (DE); SCHEEDER, Andreas, 53721 Siegburg (DE)
(74) Vertreter: Nüsse, Stephan
(86) Internationale Anmeldenummer: PCT/EP2006/002657
(87) Internationale Veröffentlichungsnummer: WO 2006/100069

(56) Entgegenhaltungen:
- EP-A- 0 677 715
- WO-A-02/090860
- DE-A1- 10 203 003
- DE-A1- 19 540 683
- DE-C1- 19 906 401
- FR-A- 918 616
- US-A- 3 313 344
- US-A- 5 103 641
- US-A1- 2001 006 103
- US-A1- 2004 035 566
- PATENT ABSTRACTS OF JAPAN Bd. 2003, Nr. 12, 5. Dezember 2003 (2003-12-05) -& JP 2004 346919 A (NISSAN DIESEL MOTOR CO LTD), 9. Dezember 2004 (2004-12-09)
- PATENT ABSTRACTS OF JAPAN Bd. 2000, Nr. 12, 3. Januar 2001 (2001-01-03) -& JP 2000 249003 A (ISUZU MOTORS LTD), 12. September 2000 (2000-09-12)

## Beschreibung

Die Erfindung betrifft einen Abgaswärmeübertrager, insbesondere einen Abgaskühler für eine Abgasrückführung in Kraftfahrzeugen nach dem Oberbegriff des Patentanspruches 1.

Abgaswärmeübertrager werden einerseits für Heizzwecke zur Erwärmung des Kühlmittels und andererseits zur Kühlung der Abgase, das heißt als Abgaskühler bei der Abgasrückführung in Kraftfahrzeugen eingesetzt. Die Abgasrückführung, kurz AGR genannt, dient - wie bekannt - der Minderung des Verbrauches und der Herabsetzung der Emissionen. Abgasrückführsysteme wurden beispielsweise durch die DE-C 199 06 401 bekannt. Ein Problem bei derartigen Abgaswärmeübertragern, insbesondere Abgaskühlern ist die Rußablagerung bei Dieselabgasen in den Abgaskanälen des Abgaskühlers. Es wurde daher in der EP-A 677 715 und in der DE-A 195 40 683 für Abgaskühler vorgeschlagen, in den Abgasrohren Verwirbelungseinrichtungen anzuordnen, die eine Rußablagerung in der Abgasströmung verhindern. Dazu sind auf der Innenseite der Abgaskanäle V-förmig angeordnete Laschen bzw. Erhebungen, so genannte Winglets angeordnet, welche spezifische Wirbel in der Abgasströmung erzeugen. Alternativ hierzu können auch Rippen verwendet werden. Diese Maßnahmen sind allerdings nicht immer ausreichend zur Verhinderung von Rußablagerungen, die zu einer Leistungsminderung des betreffenden Abgaswärmeübertragers führen - mit der Folge, dass man die Abgaskühler größer dimensionieren muss.

Bei anderen bekannten Abgaswärmeübertragern ist vorgesehen, dass dem Abgaswärmeübertrager ein Katalysator mit zueinander parallelen Strömungskanälen vorgeschaltet ist. Üblicherweise ist der Katalysator zylindrisch ausgebildet und in einer ebenfalls zylindrischen Abgasleitung angeordnet. Der Katalysator wird in Richtung seiner Symmetrieachse geradlinig durchströmt und verlängert somit die Abgasleitung, in der der Katalysator angeordnet ist Damit verbunden ist ein erhöhter Platzbedarf gegenüber einem Abgaswärmeübertrager ohne Katalysator.

Dieseloxidationskatalysatoren, bekannt unter der Abkürzung DOC, sind bei Kraftfahrzeugen im Abgasstrang bekannt Derartige Katalysatoren weisen einen metallischen oder keramischen Wabenkörper mit einer Vielzahl von feinen Abgaskanälen auf, die mit einer katalytischen Substanz, z. B. einem Edelmetall wie Platin beschichtet sind. In Anwesenheit des Katalysators oxidieren die Kohlenwasserstoffe bei Sauerstoffüberschuss im Abgas zu Kohlendioxid und Wasser. Der Aufbau derartiger Katalysatoren, z. B. mit einer Matrix aus Edelstahl ist in DE-A 29 24 592 und DE-A 35 43 011 beschrieben. Der Metallträger besteht beispielsweise aus einem glatten und einem gewellten, spiralförmig aufgewickelten Band, welches nach dem Wickeln verlötet oder verschweißt wird. Anschließend wird dieser Wabenkörper nach bekannten Verfahren mit einer katalytischen Substanz beschichtet.

In JP 2004 346 919 A ist ein Abgaskühler für eine Abgasrückführung offenbart, welcher eine Anzahl von Rohren zur Strömungsvergleichmäßigung aufweist, welche zwischen einem Gaseinlass und einem Kühlerteil gemäß dem Oberbegriff des Anspruchs 1 angeordnet sind. Dabei sind entsprechende für das Abgas vorgesehene Strömungskanäle zueinander geneigt angeordnet und die Strömungskanäle sind zu einer Flächennormalen der Abgasein- und/oder -Austrittsfläche geneigt angeordnet.

US 2004/0035566 A1 offenbart einen Abgaskühler, welcher in einem dem Kühlerteil vorgeschalteten Verteiler und einem dem Kühlerteil nachgeschalteten Sammler Leitelemente zur beruhigten Verteilung bzw. Sammlung von Abgas aufweist.

JP 2000 249003 A offenbart einen Abgaskühler, welcher eine Eintrittspfadseite für rezirkuliertes Abgas aufweist, die als Teil einer U-förmigen Passage mit einer Katalysatorschicht versehen ist, um Ruß im Abgas zu sammeln und zu verbrennen und das Abgas von NOₓ zu reinigen.

Aufgabe der Erfindung ist die Bereitstellung eines Abgaswärmeübertragers mit verringertem Platzbedarf.

Diese Aufgabe wird durch einen Abgaswärmeübertrager mit den Merkmalen des Anspruchs 1 gelöst.

Ein Grundgedanke der Erfindung ist es, die Strömungsleitvorrichtung derart in den Abgaswärmeübertrager zu integrieren, dass mit Hilfe der Strömungsleitvorrichtung eine Abgasströmung in einer Strömungsrichtung, einer Strö-mungsgeschwindigkeit, einer Strömungsquerschnittsfläche, einer Strömungsverteilung und/oder anderen Strömungsparametern beeinflusst wird. Dadurch wird zum Beispiel eine Strömungsumlenkung und/oder -aufweitung auf platzsparende Weise möglich.

Gemäß einer bevorzugten Ausführungsform kommunizieren die Strömungskanäle miteinander, beispielsweise über Durchbrüche in die Strömungskanäle voneinander trennenden Trennwänden, so dass ein Druckausgleich zwischen den einzelnen Strömungskanälen gewährleistet ist und eine Strömungsverteilung über die Strömungskanäle vergleichmäßigt wird.

Gemäß einer bevorzugten Ausgestaltung sind die Wärmeübertragerkanäle stirnseitig über eine Fläche verteilt, die der Abgasein- bzw. -austrittsfläche gegenübersteht und besonders bevorzugt davon überdeckt wird. Hierdurch wird eine Abgasströmung von der Strömungsleitvorrichtung direkt auf die Wärmeübertragerkanäle beziehungsweise von den Wärmeübertragerkanälen auf die Strömungskanäle verteilt.

Ein Abstand zwischen der Strömungsleitvorrichtung und den Wärmeübertragerkanälen ist so gering gewählt, dass die Strömungskanäle und die Wärmeübertragerkanäle gleichermaßen mit einer gleichmäßigen Strömungsverteilung beaufschlagt werden.

Gemäß einer vorteilhaften Ausführung weist die Strömungsleitvorrichtung von einer runden Abgaseintrittsfläche in eine viereckige Abgasaustrittsfläche oder umgekehrt auf, wodurch ein Übergang von einem runden in einen eckigen Strömungsquerschnitt beziehungsweise umgekehrt ermöglicht ist. Die Ecken können dabei auch abgerundet sein.

Gemäß vorteilhafter Ausführungsformen weist der Abgaswärmeübertrager beliebige Wärmeübertragerkanäle, z. B. Scheiben oder ein Rohrbündel mit Abgasrohren auf. Der Abgaswärmeübertrager kann auch einen Bypasskanal mit Abgasklappe aufweisen.

Vorteilhafterweise ist die Strömungsleitvorrichtung in den Abgaswärmeübertrager integriert, d. h. Teil des Abgaswärmeübertragers. Damit kann diese integrierte Baueinheit vorgefertigt und in eine Abgasleitung eingesetzt werden, was die Montage erleichtert. Besonders vorteilhaft ist die Strömungsleitvorrichtung innerhalb des Eintrittsstutzens angeordnet, womit der Vorteil einer äußerst kurzen Baulänge erreicht wird, weil die Strömungsleitvorrichtung in einen bereits vorhandenen Raum des Abgaswärmeübertragers eingesetzt wird.

Nach einer weiteren vorteilhaften Ausgestaltung der Erfindung ist der Abgaswärmeübertrager in einer AGR-Leitung angeordnet, die entweder vor oder hinter einer Abgasturbine an die Abgasleitung des Motors angeschlossen ist Damit ergeben sich unterschiedliche Abgastemperaturen beim Eintritt in den Abgaswärmeübertrager.

Eine Dichte der Strömungskanäle im Querschnitt beträgt beispielsweise 100 bis 600, bevorzugt 150 bis 300 pro Quadratzoll. Die Strömungskanäle sind beispielsweise 15 bis 100, bevorzugt bis 80, besonders bevorzugt 30 bis 40 mm lang. Die Strömungskanäle sind vorzugsweise mit Platin beschichtet, insbesondere mit einer Dichte von 20 bis 320, insbesondere 40 bis 200 oder 250 Gramm pro Kubikfuß.

Die Abgasaustrittsfläche beträgt bevorzugt 30 bis 150 %, besonders bevorzugt 80 bis 110 % einer Querschnittsfläche eines durch die Wärmeübertragerkanäle gebildeten Wärmeübertragerblocks. Ein Druckverlust der Strömungsleitvorrichtung beträgt bevorzugt weniger als 100 %, besonders bevorzugt weniger als 50 %, im besonderen weniger als 30%, besonders vorteilhaft 5 bis 20 % eines Druckverlustes der Wärmeubertragerkanäle insgesamt.

Gemäß einer bevorzugten Ausführungsform sind die Wärmeübertragerkanäle von einem insbesondere flüssigen Kühlmittel umströmbar. Bevorzugt weist der Abgaswärmeübertrager einen Mantel zur Führung des Kühlmittels auf, wobei der Mantel vorzugsweise einen Eintrittstutzen und einen Austrittsstutzen für das Kühlmittel aufweiset.

Gemäß einer vorteilhaften Variante sind die Wärmeübertragerkanäle von einem gasförmigen Kühlmittel, insbesondere von Kühlluft kühlbar.

Ausführungsbeispiele der Erfindung sind in der Zeichnung dargestellt und werden im Folgenden genauer beschrieben. Es zeigen
- Fig. 1: schematisch ein erstes Ausführungsbeispiel der Erfindung,
- Fig.2: schematisch ein zweites Ausführungsbeispiel,
- Fig. 3: einen schematischen Ausschnitt eines dritten Ausführungsbei- spiels,
- Fig. 4: einen schematischen Ausschnitt eines vierten Ausführungsbei- spiels,
- Fig. 5: einen schematischen Querschnitt eines fünften Ausführungsbei- spiels,
- Fig. 6: einen schematischen Querschnitt eines sechsten Ausführungsbei- spiels und
- Fig. 7: schematisch ein Abgasrückführungssystem.

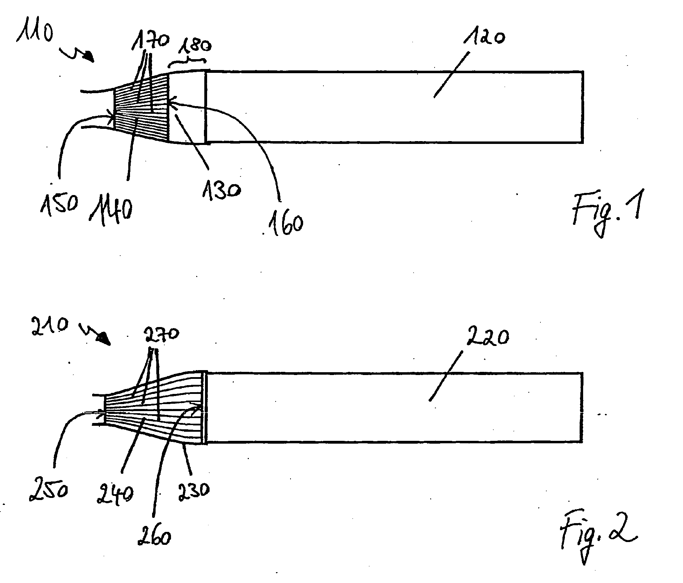

Fig. 1 zeigt einen Abgaswärmeübertrager 110 mit nicht im einzelnen dargestellten Wärmeübertragerkanälen, die in einem Wärmeübertragerblock 120, beispielsweise Rohrbündel, zusammengefasst sind. Die Wärmeübertragerkanäle münden einströmseitig in eine Verteilkammer 130, in der eine Strömungsleitvorrichtung 140 mit einer ebenen Abgaseintrittsfläche 150 und einer ebenen, zu der Abgaseintrittsfläche 150 parallelen Abgasaustrittsfläche 160 angeordnet ist. Die Verteilkammer 130 ist beispielsweise an den Wärmeübertragerblock 120 angeschweißt oder angelötet.

Eine Vielzahl von Strömungskanälen 170 erstreckt sich von der Abgaseintrittsfläche 150 zu der Abgasaustrittsfläche 160. Die Strömungskanäle 170 sind zueinander geneigt, so dass ein Querschnitt einer in Fig. 1 von links in den Abgaswärmeübertrager 110 eintretenden Abgasströmung mit Hilfe der Strömungsleitvorrichtung 140 vergrößert wird, wobei die Abgasströmung dabei vorteilhafterweise zusätzlich vergleichmäßigt wird.

Die Abgaseintrittsfläche 150 und die Abgasaustrittsfläche 160 sind rund. Wenn die Querschnittsfläche des Wärmeübertragerblocks 120 eckig ist, ist ein Mindestabstand zwischen der Abgasaustrittsfläche 160 und dem Wärmeübertragerblock 120 erforderlich, da die Verteilkammer 130 einen Übergangsbereich 180 von der runden auf die eckige Querschnittsform aufweist.

Fig. 2 zeigt einen Abgaswärmeübertrager 210 mit nicht im einzelnen dargestellten Wärmeübertragerkanälen, die in einem Wärmeübertragerblock 220, beispielsweise Rohrbündel, zusammengefasst sind. Die Wärmeübertragerkanäle münden einströmseitig in eine Verteilkammer 230, in der eine Strömungsleitvorrichtung 240 mit einer ebenen Abgaseintrittsfläche 250 und einer ebenen, zu der Abgaseintrittsfläche 250 parallelen Abgasaustrittsfläche 260 angeordnet ist. Die Verteilkammer 230 ist beispielsweise an den Wärmeübertragerblock 220 angeschweißt oder angelötet.

Eine Vielzahl von Strömungskanälen 270 erstreckt sich von der Abgaseintrittsfläche 250 zu der Abgasaustrittsfläche 260. Die Strömungskanäle 270 sind teilweise gekrümmt, teilweise geradlinig und zueinander geneigt, so dass ein Querschnitt einer in Fig. 2 von links in den Abgaswärmeübertrager 210 eintretenden Abgasströmung mit Hilfe der Strömungsleitvorrichtung 240 vergrößert wird, wobei die Abgasströmung dabei vorteilhafterweise zusätzlich vergleichmäßigt wird.

Die Abgaseintrittsfläche 250 ist rund und die Abgasaustrittsfläche 260 deckt die Querschnittsfläche des Wärmeübertragerblocks 220 beziehungsweise der Wärmeübertragerkanäle ab und ist zu diesem Zweck beispielsweise eckig. Die Strömungsleitvorrichtung bewirkt also einen Übergang von der runden auf die eckige Querschnittsform, so dass der Abstand zwischen der Abgasaustrittsfläche 260 und dem Wärmeübertragerblock 220 sehr gering belassen sein kann.

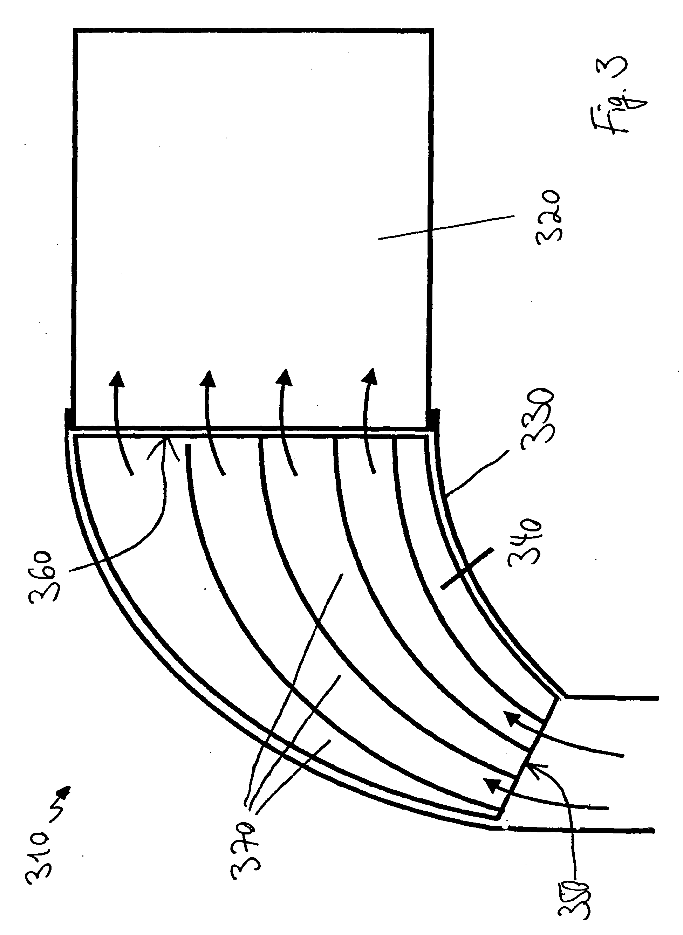

Fig. 3 zeigt einen Abgaswärmeübertrager 310 mit nicht im einzelnen dargestellten Wärmeübertragerkanälen, die in einem Wärmeübertragerblock 320, beispielsweise Rohrbündel, zusammengefasst sind. Die Wärmeübertragerkanäle münden einströmseitig in eine Verteilkammer 330, in der eine Strömungsleitvorrichtung 340 mit einer ebenen Abgaseintrittsfläche 350 und einer ebenen, zu der Abgaseintrittsfläche 350 geneigten Abgasaustrittsfläche 360 angeordnet ist. Die Verteilkammer 330 ist beispielsweise an den Wärmeübertragerblock 320 angeschweißt oder angelötet.

Eine Vielzahl von Strömungskanälen 370 erstreckt sich von der Abgasentrittsfläche 350 zu der Abgasaustrittsfläche 360. Die Strömungskanäle 370 sind gekrümmt und so angeordnet, dass ein Querschnitt einer in Fig. 3 von unten in den Abgaswärmeübertrager 310 eintretenden Abgasströmung mit Hilfe der Strömungsleitvorrichtung 340 vergrößert wird, wobei die Abgasströmung dabei vorteilhafterweise zusätzlich vergleichmäßigt wird. Außerdem bewirkt die Strömungsleitvorrichtung 340 eine Umlenkung der Abgasströmung.

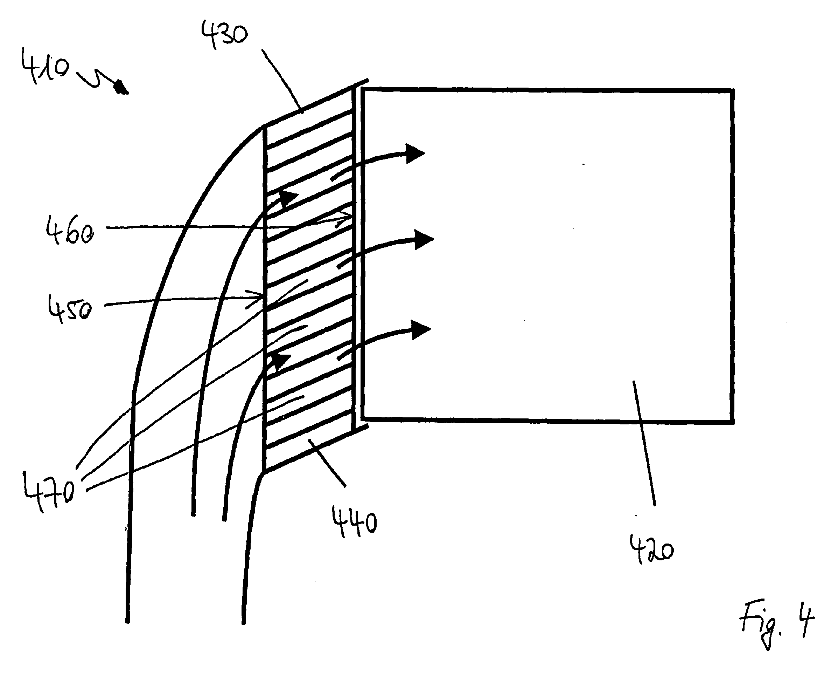

Fig. 4 zeigt einen Abgaswärmeübertrager 410 mit nicht im einzelnen dargestellten Wärmeübertragerkanälen, die in einem Wärmeübertragerblock 420, beispielsweise Rohrbündel, zusammengefasst sind. Die Wärmeübertragerkanäle münden einströmseitig in eine Verteilkammer 430, in der eine Strömungsleitvorrichtung 440 mit einer ebenen Abgaseintrittsfläche 450 und einer ebenen, zu der Abgaseintrittsfläche 450 geneigten Abgasaustrittsfläche 460 angeordnet ist. Die Verteilkammer 430 ist beispielsweise an den Wärmeübertragerblock 420 angeschweißt oder angelötet.

Eine Vielzahl von Strömungskanälen 470 erstreckt sich von der Abgaseintrittsfläche 450 zu der Abgasaustrittsfläche 460. Die Strömungskanäle 470 sind zueinander parallel, jedoch gegenüber Flächennormalen sowohl der Abgaseintrittsfläche 450 als auch der Abgasaustrittsfläche 460 geneigt, so dass ein Querschnitt einer in Fig. 4 von unten in den Abgaswärmeübertrager 410 eintretenden Abgasströmung mit 410 eintretenden Abgasströmung mit Hilfe der Strömungsleitvorrichtung 440 umgelenkt und bevorzugt vergleichmäßigt wird.

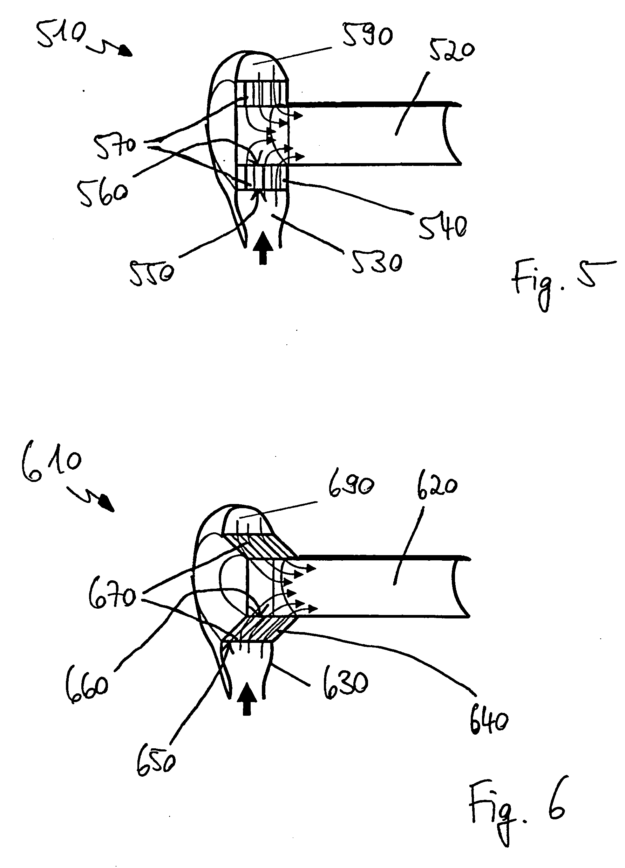

Fig. 5 zeigt einen Abgaswärmeübertrager 510 mit nicht im einzelnen dargestellten Wärmeübertragerkanälen, die in einem Wärmeübertragerblock 520, beispielsweise Rohrbündel, zusammengefasst sind. Die Wärmeübertragerkanäle münden einströmseitig in eine Verteilkammer 530, in der eine Strömungsleitvorrichtung 540 mit einer zylindrischen Abgaseintrittsfläche 550 und einer zylindrischen, zu der Abgaseintrittsfläche 550 koaxialen Abgasaustrittsfläche 560 angeordnet ist.

Eine Vielzahl von Strömungskanälen 570 erstreckt sich sternförmig von der Abgaseintrittsfläche 550 zu der Abgasaustrittsfläche 560. Die Strömungskanäle 570 sind aufgrund der Sternform zueinander geneigt, jedoch gegenüber Flächennormalen sowohl der Abgaseintrittsfläche 550 als auch der Abgasaustrittsfläche 560 parallel, das heißt die Strömungskanäle 570 münden jeweils senkrecht zu den Flächen 550, 560. Um die Abgaseintrittsfläche 550 möglichst gleichmäßig mit Abgas zu beaufschlagen, ist sie von einem Ringkanal 590 umgeben, über den eine in Fig. 5 von unten in den Abgaswärmeübertrager 510 eintretende Abgasströmung zu der Strömungsleitvorrichtung 540 geleitet wird. In einem Innenraum der Strömungsleitvorrichtung, also innerhalb des durch die Abgasaustrittsfläche 560 gebildeten Zylinders wird das Abgas gesammelt und den Wärmeübertragerkanälen des Wärmeübertragerblocks 520 zugeführt.

Fig. 6 zeigt einen Abgaswärmeübertrager 610 mit nicht im einzelnen dargestellten Wärmeübertragerkanälen, die in einem Wärmeübertragerblock 620, beispielsweise Rohrbündel, zusammengefasst sind. Die Wärmeübertragerkanäle münden einströmseitig in eine Verteilkammer 630, in der eine Strömungsleitvorrichtung 640 mit einer zylindrischen Abgaseintrittsfläche 650 und einer zylindrischen, zu der Abgaseintrittsfläche 650 koaxialen Abgasaustrittsfläche 660 angeordnet ist.

Eine Vielzahl von Strömungskanälen 670 erstreckt sich sternförmig von der Abgaseintrittsfläche 650 zu der Abgasaustrittsfläche 660. Die Strömungskanäle 670 sind aufgrund der Sternform zueinander und darüberhinaus gegenüber Flächennormalen sowohl der Abgaseintrittsfläche 650 als auch der Abgasaustrittsfläche 660 geneigt. Um die Abgaseintrittsfläche 650 möglichst gleichmäßig mit Abgas zu beaufschlagen, ist sie von einem Ringkanal 690 umgeben, über den eine in Fig. 6 von unten in den Abgaswärmeübertrager 610 eintretende Abgasströmung zu der Strömungsleitvorrichtung 640 geleitet wird. In einem Innenraum der Strömungsleitvorrichtung, also innerhalb des durch die Abgasaustrittsfläche 660 gebildeten Zylinders wird das Abgas gesammelt und den Wärmeübertragerkanälen des Wärmeübertragerblocks 620 zugeführt, wobei durch die Neigung der Strömungskanäle 670 zu den Flächennormalen der Flächen 650, 660 eine zusätzliche Umlenkung und damit unter Umständen eine Druckverlustverringerung bewerkstelligt wird.

Gemäß nicht gezeigten Ausführungsbeispielen ist die Verteilkammer über eine Flanschverbindung an dem Wärmeübertragerblock befestigt.

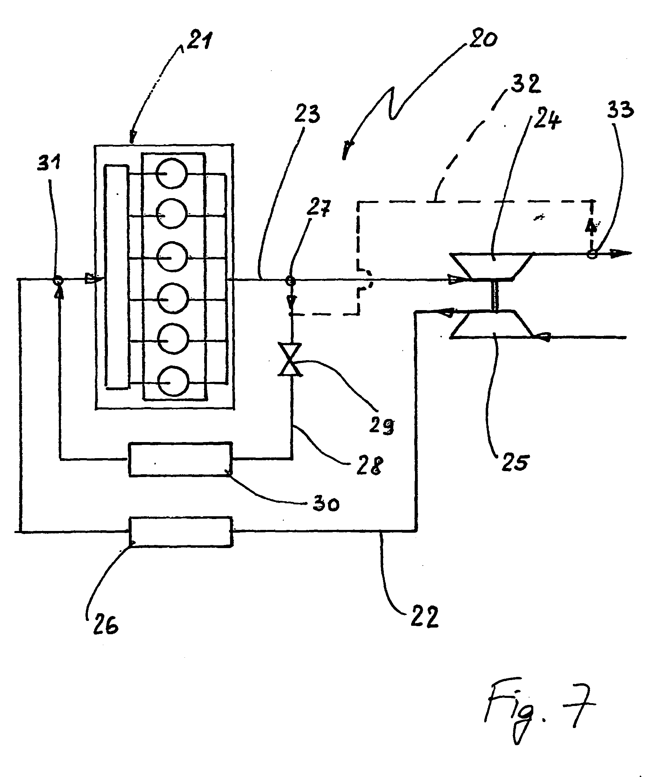

Fig. 7 zeigt in schematischer Darstellung ein Abgasrückführungssystem 20 mit einem Dieselmotor 21, dem eine Ansaugleitung 22 und eine Abgasleitung 23 zugeordnet ist. In der Ansaugleitung 22 ist ein von einer Abgasturbine 24 angetriebener Turbolader 25 angeordnet, welcher die Ansaugluft verdichtet und einem Ladeluftkühler 26 zuführt. Die Abgasturbine 24 ist in der Abgasleitung 23 angeordnet und wird mit den Abgasen des Dieselmotors 21 beaufschlagt. Eine Abgasrückführleitung 28 mit einem Abgasrückführventil 29 und einem Abgaswärmeübertrager 30 ist an einem Verzweigungspunkt 27 an die Abgasleitung 23 und im Anschlusspunkt 31 an die Ansaugleitung 22 angeschlossen. Das Abgas wird somit gekühlt zurückgeführt. Die Entnahme des Abgases im Verzweigungspunkt 27 erfolgt also vor der Abgasturbine 24. Gemäß einer Alternative, welche durch eine gebrochen dargestellte Abgasrückführleitung 32 dargestellt ist, wird das Abgas in einem Abzweigungspunkt 33 hinter der Abgasturbine 24 entnommen. Der Abgaswärmeübertrager 30 entspricht dem oben beschriebenen erfindungsgemäßen Abgaswärmeübertrager. Im Übrigen kann der Abgaswärmeübertrager 30 auch als ein Abgaswärmeübertrager mit Bypasskanal und Abgasbypassklappe, z. B. gemäß der DE 102 03 003 A1 ausgebildet sein.

## Patentansprüche

1. Abgaswärmeübertrager (110-610), insbesondere Abgaskühler für eine Abgasrückführung in Kraftfahrzeugen mit von Abgas durchströmbaren Wärmeübertragerkanälen, die in eine Verteil- und/oder Sammelkammer (130-630) münden, mit einer in der Verteil- und/oder Sammelkammer (130-630) angeordneten Strömungsleitvorrichtung (140-640), wobei die Strömungsleitvorrichtung (140-640) eine Abgaseintrittsfläche (150-650), eine Abgasaustrittsfläche (160-660) und eine Vielzahl sich von der Abgaseintrittsfläche (150-650) zu der Abgasaustrittsfläche (160-660) erstreckender Strömungskanäle (170-670) aufweist, wobei die Strömungskanäle (170, 270, 570, 670) zueinander, die Strömungskanäle (470, 670) zu einer Flächennormalen der Abgasein- und/oder -austrittsfläche und/oder die Flächennormalen der Abgasein- und -austrittsfläche (350, 360) zueinander geneigt angeordnet sind, **dadurch gekennzeichnet, dass** ein Abstand zwischen der Abgasaustrittsfläche (160-660) der Strömungsleitvorrichtung (140-640) und den Wärmeübertragerkanälen belassen ist und der Abstand kleiner als 15 mm ist und wobei die Strömungsleitvorrichtung (140-640) ein Katalysator ist.

2. Abgaswärmeübertrager (110-610) nach Anspruch 1, **dadurch gekennzeichnet, dass** die Strömungsleitvorrichtung (140-640) ein Oxidations- oder Diesel-Oxidationskatalysator ist.

3. Abgaswärmeübertrager (110-610) nach einem der vorhergehenden Ansprüche, **dadurch gekennzeichnet, dass** die Strömungskanäle (170-670), die Abgaseintrittsflächennormale und/oder die Abgasaustrittsflächennormale zu einer Hauptdurchströmungsrichtung der Wärmeübertragerkanäle geneigt angeordnet sind.

4. Abgaswärmeübertrager (110-610) nach einem der vorhergehenden Ansprüche, **dadurch gekennzeichnet, dass** die Strömungskanäle (170-670) vollständig voneinander getrennt sind.

5. Abgaswärmeübertrager (110-610) nach einem der vorhergehenden Ansprüche, **dadurch gekennzeichnet, dass** die Strömungskanäle (170-670) über Durchbrüche miteinander kommunizieren.

6. Abgaswärmeübertrager (110-610) nach einem der vorhergehenden Ansprüche, **dadurch gekennzeichnet, dass** die Abgasaustrittsfläche (160-660) so groß ist wie die Abgaseintrittsfläche (150-650).

7. Abgaswärmeübertrager (110-610) nach einem der vorhergehenden Ansprüche, **dadurch gekennzeichnet, dass** die Abgasaustrittsfläche (160-660) kleiner oder größer ist als die Abgaseintrittsfläche (150-650).

8. Abgaswärmeübertrager (110-610) nach einem der vorhergehenden Ansprüche, **dadurch gekennzeichnet, dass** die Abgasein- (150-650) oder -austrittsfläche (160-660) den Wärmeübertragerkanälen gegenübersteht und insbesondere alle Wärmeübertragerkanäle aus- beziehungsweise eintrittsseitig überdeckt.

9. Abgaswärmeübertrager (110-610) nach einem der vorhergehenden Ansprüche, **dadurch gekennzeichnet, dass** der Abstand kleiner als 10 mm, besonders bevorzugt kleiner als 5 mm ist.

10. Abgaswärmeübertrager (110-610) nach einem der vorhergehenden Ansprüche, **dadurch gekennzeichnet, dass** die Strömungskanäle (170, 470, 570, 670) geradlinig ausgebildet sind.

11. Abgaswärmeübertrager (110-610) nach einem der vorhergehenden Ansprüche, **dadurch gekennzeichnet, dass** die Strömungskanäle (270-370) gekrümmt ausgebildet sind.

12. Abgaswärmeübertrager (110-610) nach einem der vorhergehenden Ansprüche, **dadurch gekennzeichnet, dass** die Abgasein- (150-650) und/oder -austrittsfläche (160-660) rund, insbesondere kreisförmig ist.

13. Abgaswärmeübertrager (110-610) nach einem der vorhergehenden Ansprüche, **dadurch gekennzeichnet, dass** die Abgasein- (150-650) und/oder -austrittsfläche (160-660) eckig, insbesondere vier- oder rechteckig ist.

14. Abgaswärmeübertrager (110-610) nach einem der vorhergehenden Ansprüche, **dadurch gekennzeichnet, dass** die Abgasein- (550-650) und/oder -austrittsfläche (560-660) gekrümmt, insbesondere zylindrisch ist.

15. Abgaswärmeübertrager (110-610) nach einem der vorhergehenden Ansprüche, **dadurch gekennzeichnet, dass** die Abgasein- (550-650) beziehungsweise -austrittsfläche (560-660) von einem Ringkanal für das Abgas umgeben ist.

16. Abgaswärmeübertrager (110-610) nach einem der vorhergehenden Ansprüche, **dadurch gekennzeichnet, dass** die Verteil- (130-630) und/oder Sammelkammer als Diffusor ausgebildet ist und die Strömungsleitvorrichtung (140-640) insbesondere den Diffusorquerschnitt ausfüllt.

17. Abgaswärmeübertrager (110-610) nach einem der vorhergehenden Ansprüche, **dadurch gekennzeichnet, dass** die Wärmeübertragerkanäle durch Scheibenpaare gebildet sind.

18. Abgaswärmeübertrager (110-610) nach einem der vorhergehenden Ansprüche, **dadurch gekennzeichnet, dass** die Wärmeübertragerkanäle durch Rohre gebildet sind, die mit ihren Rohrenden in Rohrböden gehalten und von einem das Kühlmittel führenden Gehäuse umgeben sind.

19. Abgaswärmeübertrager (110-610) nach einem der vorhergehenden Ansprüche, **dadurch gekennzeichnet, dass** die Verteil- (130-630) und/oder Sammelkammer einen Flansch zum Anschluss an eine Abgasleitung, insbesondere an eine AGR-Leitung aufweist.

## Claims

1. Exhaust gas heat exchanger (110-610), in particular an exhaust gas cooler for exhaust gas recirculation in motor vehicles having heat exchanger channels through which exhaust gas can flow and which lead into a distributing and/or collecting chamber (130-630), having a flow conducting device (140-640) arranged in the distributing and/or collecting chamber (130-630), the flow conducting device (140-640) comprising an exhaust gas inlet surface (150-650), an exhaust gas outlet surface (160-660) and a plurality of flow channels (170-670) extending from the exhaust gas inlet surface (150-650) to the exhaust gas outlet surface (160-660), the flow channels (170, 270, 570, 670) being inclined relative to one another, the flow channels (470, 670) being inclined relative to a surface normal of the exhaust gas inlet and/or outlet surface, and/or the surface normals of the exhaust gas inlet and outlet surfaces (350, 360) being inclined relative to one another, **characterised in that** a distance is left between the exhaust gas outlet surface (160-660) of the flow conducting device (140-640) and the heat exchanger channels and said distance is less than 15 mm, and **in that** the flow conducting device (140-640) is a catalytic converter.

2. Exhaust gas heat exchanger (110-610) according to claim 1, **characterised in that** the flow conducting device (140-640) is an oxidation or diesel oxidation catalytic converter.

3. Exhaust gas heat exchanger (110-610) according to either of the preceding claims, **characterised in that** the flow channels (170-670), the exhaust gas inlet surface normal and/or the exhaust gas outlet surface normal are inclined relative to a principal direction of flow of the heat exchanger channels.

4. Exhaust gas heat exchanger (110-610) according to any one of the preceding claims, **characterised in that** the flow channels (170-670) are completely separate from one another.

5. Exhaust gas heat exchanger (110-610) according to any one of the preceding claims, **characterised in that** the flow channels (170-670) communicate with each other via apertures.

6. Exhaust gas heat exchanger (110-610) according to any one of the preceding claims, **characterised in that** the exhaust gas outlet surface (160-660) is as large as the exhaust gas inlet surface (150-650).

7. Exhaust gas heat exchanger (110-610) according to any one of the preceding claims, **characterised in that** the exhaust gas outlet surface (160-660) is smaller or larger than the exhaust gas inlet surface (150-650).

8. Exhaust gas heat exchanger (110-610) according to any one of the preceding claims, **characterised in that** the exhaust gas inlet (150-650) or outlet surface (160-660) is opposite the heat exchanger channels and in particular covers all the heat exchanger channels on the outlet or inlet side.

9. Exhaust gas heat exchanger (110-610) according to any one of the preceding claims, **characterised in that** the distance is less than 10 mm, particularly preferably less than 5 mm.

10. Exhaust gas heat exchanger (110-610) according to any one of the preceding claims, **characterised in that** the flow channels (170, 470, 570, 670) are of a rectilinear construction.

11. Exhaust gas heat exchanger (110-610) according to any one of the preceding claims, **characterised in that** the flow channels (270-370) are of a curved construction.

12. Exhaust gas heat exchanger (110-610) according to any one of the preceding claims, **characterised in that** the exhaust gas inlet (150-650) and/or outlet surface (160-660) is round, in particular circular.

13. Exhaust gas heat exchanger (110-610) according to any one of the preceding claims, **characterised in that** the exhaust gas inlet (150-650) and/or outlet surface (160-660) is angular, in particular quadrangular or rectangular.

14. Exhaust gas heat exchanger (110-610) according to any one of the preceding claims, **characterised in that** the exhaust gas inlet (550-650) and/or outlet surface (560-660) is curved, in particular cylindrical.

15. Exhaust gas heat exchanger (110-610) according to any one of the preceding claims, **characterised in that** the exhaust gas inlet (550-650) or outlet surface (560-660) is surrounded by an annular channel for the exhaust gas.

16. Exhaust gas heat exchanger (110-610) according to any one of the preceding claims, **characterised in that** the distributing (130-630) and/or collecting chamber is constructed as a diffuser and the flow conducting device (140-640) in particular fills the diffuser cross-section.

17. Exhaust gas heat exchanger (110-610) according to any one of the preceding claims, **characterised in that** the heat exchanger channels are formed by pairs of discs.

18. Exhaust gas heat exchanger (110-610) according to any one of the preceding claims, **characterised in that** the heat exchanger channels are formed by tubes which are held with their tube ends in tube bases and surrounded by a housing which conducts the coolant.

19. Exhaust gas heat exchanger (110-610) according to any one of the preceding claims, **characterised in that** the distributing (130-630) and/or collecting chamber comprises a flange for connection to an exhaust pipe, in particular to an EGR pipe.

## Revendications

1. Echangeur thermique pour gaz d'échappement (110 - 610), notamment refroidisseur de gaz d'échappement pour la recirculation des gaz d'échappement dans les véhicules à moteur avec des canaux d'échange thermique pouvant être traversés par des gaz d'échappement, qui débouchent dans une chambre de distribution et/ou de collecte (130 - 630), avec un dispositif de conduite d'écoulement (140 - 640) agencé dans la chambre de distribution et/ou de collecte (130 - 630), le dispositif de conduite d'écoulement (140 - 640) présentant une surface d'entrée des gaz d'échappement (150 - 650), une surface de sortie des gaz d'échappement (160 - 660) et une pluralité de canaux d'écoulement (170 - 670) s'étendant de la surface d'entrée des gaz d'échappement (150 - 650) à la surface de sortie des gaz d'échappement (160 - 660), les canaux d'écoulement (170, 270, 570, 670) étant agencés de manière inclinée l'un par rapport à l'autre, les canaux d'écoulement (470, 670) étant agencés de manière inclinée par rapport à une normale à la surface d'entrée et/ou de sortie des gaz d'échappement et/ou les normales à la surface d'entrée et de sortie des gaz d'échappement (350, 360) étant agencées de manière inclinée l'une par rapport à l'autre, **caractérisé en ce qu'**une distance est laissée entre la surface de sortie des gaz d'échappement (160 - 660) du dispositif de conduite d'écoulement (140 - 640) et les canaux d'échange thermique et la distance est inférieure à 15 mm et le dispositif de conduite d'écoulement (140 - 640) étant un catalyseur.

2. Echangeur thermique pour gaz d'échappement (110 - 610) selon la revendication 1, **caractérisé en ce que** le dispositif de conduite d'écoulement (140 - 640) est un catalyseur d'oxydation ou d'oxydation diesel.

3. Echangeur thermique pour gaz d'échappement (110-610) selon l'une quelconque des revendications précédentes, **caractérisé en ce que** les canaux d'écoulement (170 - 670), la normale à la surface d'entrée des gaz d'échappement et/ou la normale à la surface de sortie des gaz d'échappement sont agencés de manière inclinée par rapport à un sens d'écoulement principal des canaux d'échange thermique.

4. Echangeur thermique pour gaz d'échappement (110-610) selon l'une quelconque des revendications précédentes, **caractérisé en ce que** les canaux d'écoulement (170 - 670) sont entièrement séparés les uns des autres.

5. Echangeur thermique pour gaz d'échappement (110 - 610) selon l'une quelconque des revendications précédentes, **caractérisé en ce que** les canaux d'écoulement (170 - 670) communiquent les uns avec les autres par le biais d'ouvertures.

6. Echangeur thermique pour gaz d'échappement (110-610) selon l'une quelconque des revendications précédentes, **caractérisé en ce que** la surface de sortie des gaz d'échappement (160 - 660) est aussi grande que la surface d'entrée des gaz d'échappement (150 - 650).

7. Echangeur thermique pour gaz d'échappement (110 - 610) selon l'une quelconque des revendications précédentes, **caractérisé en ce que** la surface de sortie des gaz d'échappement (160 - 660) est plus petite ou plus grande que la surface d'entrée des gaz d'échappement (150 - 650).

8. Echangeur thermique pour gaz d'échappement (110-610) selon l'une quelconque des revendications précédentes, **caractérisé en ce que** la surface d'entrée (150 - 650) ou de sortie (160 - 660) des gaz d'échappement fait face aux canaux d'échange thermique et couvre en particulier tous les canaux d'échange thermique côté sortie respectivement côté entrée.

9. Echangeur thermique pour gaz d'échappement (110 - 610) selon l'une quelconque des revendications précédentes, **caractérisé en ce que** la distance est inférieure à 10 mm, de manière particulièrement préférée inférieure à 5 mm.

10. Echangeur thermique pour gaz d'échappement (110-610) selon l'une quelconque des revendications précédentes, **caractérisé en ce que** les canaux d'écoulement (170, 470, 570, 670) sont réalisés de manière rectiligne.

11. Echangeur thermique pour gaz d'échappement (110 - 610) selon l'une quelconque des revendications précédentes, **caractérisé en ce que** les canaux d'écoulement (270 - 370) sont réalisés de manière courbée.

12. Echangeur thermique pour gaz d'échappement (110-610) selon l'une quelconque des revendications précédentes, **caractérisé en ce que** la surface d'entrée (150 - 650) et/ou de sortie (160- 660) des gaz d'échappement est ronde, en particulier circulaire.

13. Echangeur thermique pour gaz d'échappement (110 - 610) selon l'une quelconque des revendications précédentes, **caractérisé en ce que** la surface d'entrée (150 - 650) et/ou de sortie (160 - 660) des gaz d'échappement est polygonale, en particulier carrée ou rectangulaire.

14. Echangeur thermique pour gaz d'échappement (110 - 610) selon l'une quelconque des revendications précédentes, **caractérisé en ce que** la surface d'entrée (550 - 650) et/ou de sortie (560 - 660) des gaz d'échappement est courbée, en particulier cylindrique.

15. Echangeur thermique pour gaz d'échappement (110-610) selon l'une quelconque des revendications précédentes, **caractérisé en ce que** la surface d'entrée (550 - 650) respectivement de sortie (560 - 660) des gaz d'échappement est entourée par un canal de ceinture pour les gaz d'échappement.

16. Echangeur thermique pour gaz d'échappement (110 - 610) selon l'une quelconque des revendications précédentes, **caractérisé en ce que** la chambre de distribution (130 - 630) et/ou de collecte est réalisée sous forme de diffuseur et le dispositif de conduite d'écoulement (140 - 640) remplit en particulier la section transversale du diffuseur.

17. Echangeur thermique pour gaz d'échappement (110 - 610) selon l'une quelconque des revendications précédentes, **caractérisé en ce que** les canaux d'échange thermique sont formés par des paires de rondelles.

18. Echangeur thermique pour gaz d'échappement (110-610) selon l'une quelconque des revendications précédentes, **caractérisé en ce que** les canaux d'échange thermique sont formés par des tubes, qui sont maintenus avec leurs extrémités de tubes dans des plaques porte-tubes et sont entourés par une enveloppe conduisant le produit de refroidissement.

19. Echangeur thermique pour gaz d'échappement (110-610) selon l'une quelconque des revendications précédentes, **caractérisé en ce que** la chambre de distribution (130-630) et/ou de collecte présente une bride servant au raccordement à une conduite des gaz d'échappement, en particulier à une conduite de recirculation des gaz d'échappement.
